# FASCICULE DE BREVET EUROPEEN

(11) **EP 4 045 768 B1**
(45) Date de publication et mention de la délivrance du brevet: **03.12.2025**
(21) Numéro de dépôt: 20797817.2
(22) Date de dépôt: 08.10.2020
(51) Int. Cl.: F01D 5/03, F01D 5/06, F02C 3/067, F02K 3/072

(54) **VIROLE AMELIOREE DE ROUE MOBILE DE TURBINE CONTRAROTATIVE**
VERBESSERTE HÜLSE FÜR EIN GEGENLÄUFIGES TURBINENLAUFRAD
IMPROVED FERRULE FOR COUNTER-ROTATING TURBINE IMPELLER

(30) Priorité: 17.10.2019 FR 1911614
(43) Date de publication de la demande: 24.08.2022
(73) Titulaire: SAFRAN AIRCRAFT ENGINES, 75015 Paris (FR)
(72) Inventeur: COUSSEAU, Simon, Jean-Marie, Bernard, 77550 MOISSY-CRAMAYEL (FR); DELALANDRE, Mathieu, Patrick, Henri, 77550 MOISSY-CRAMAYEL (FR); SULTANA, Patrick, Jean, Laurent, 77550 MOISSY-CRAMAYEL (FR); ZAMAI, Laurent, Cédric, 77550 MOISSY-CRAMAYEL (FR)
(74) Mandataire: Cabinet Beau de Loménie
(86) Numéro de dépôt international: PCT/FR2020/051782
(87) Numéro de publication internationale: WO 2021/074508

(56) Documents cités:
- EP-A1- 1 626 170
- FR-A1- 2 601 069
- GB-A- 586 552
- US-A1- 2006 093 468

## Description

### Domaine Technique

Le présent exposé concerne le domaine des turbomachines. Plus précisément, le présent exposé concerne une turbine contrarotative de turbomachine, et une turbomachine comprenant une telle turbine.

### Technique antérieure

Une turbomachine d'aéronef comprend généralement, d'amont en aval dans le sens d'écoulement des gaz, une soufflante, un compresseur basse pression, un compresseur haute pression, une chambre de combustion, une turbine haute pression et une turbine basse pression. Le rotor du compresseur basse pression est entraîné par le rotor de la turbine basse pression, et le rotor du compresseur haute pression est entraîné par le rotor de la turbine haute pression.

Afin d'améliorer le rendement du moteur, les turbomachines d'aéronef peuvent être équipées d'une turbine contrarotative, à la place de la turbine basse pression. La turbine contrarotative comprend un rotor interne, dit rotor rapide, relié à un premier arbre de turbine, et configuré pour tourner dans un premier sens de rotation, et un rotor externe, dit rotor lent, relié à un second arbre de turbine, et configuré pour tourner coaxialement au rotor interne et dans un deuxième sens de rotation, opposé au premier sens de rotation. Les aubes du premier rotor sont intercalées avec les aubes du deuxième rotor selon la direction axiale. Les aubes du rotor interne sont fixées à un disque, ou tambour interne solidaire du premier arbre de turbine et tournant dans le premier sens de rotation, et les aubes du rotor externe sont fixées à un disque, ou tambour externe solidaire du deuxième arbre de turbine et tournant dans le deuxième sens de rotation. EP 1 626 170 A1, GB 586 552 A, FR 2 601 069 A1 et US 2006/093468 A1 divulguent des exemples de turbines contrarotatives.

De manière connue, la liaison entre le tambour externe du rotor externe, et le deuxième arbre de turbine, est réalisée par l'intermédiaire d'une roue mobile aval fixée au tambour externe en aval de celui-ci. Plus précisément, la roue mobile aval comprend une virole radiale externe fixée au tambour externe axialement en aval de celui-ci, et une virole radiale interne, ou disque interne, solidaire du deuxième arbre de turbine, notamment par l'intermédiaire d'un arbre de support arrière s'étendant entre la virole interne et le deuxième arbre de turbine. Des aubes s'étendent radialement entre la virole interne et la virole externe, et permettent de maintenir ces dernières solidaires l'une de l'autre, la rotation de l'une entrainant la rotation de l'autre. Ainsi, lorsque les aubes du rotor externe sont entrainées en rotation dans le deuxième sens de rotation, la rotation du tambour externe entraine la rotation de la virole externe. Ce mouvement de rotation est transmis à la virole interne par l'intermédiaire des aubes de la roue mobile aval, permettant la rotation du deuxième arbre de turbine.

Les viroles interne et externe, et les aubes s'étendant entre celles-ci, forment une seule et même pièce, la roue mobile aval étant ainsi fabriquée de manière monobloc. Or, les aubes de la roue mobile aval subissent les températures de la veine d'écoulement d'air chaud dans laquelle elles sont immergées. Ces aubes se dilatent donc plus que les viroles interne et externe, qui sont soumises à des températures moins importantes. La déformation des aubes due aux températures élevées de la veine génère par conséquent des contraintes importantes sur les viroles interne et externe, appelé phénomène de « poinçonnement ». Les forces centrifuges accentuent par ailleurs ces contraintes. Ces différentes contraintes nuisent à la fiabilité et à la durée de vie des aubes de la roue mobile aval, et par extension de la turbine.

Il existe donc un besoin pour une architecture de turbine contrarotative permettant de palier au moins en partie les inconvénients ci-dessus.

### Exposé de l'invention

Le présent exposé concerne une turbine contrarotative de turbomachine telle que définie dans la revendication 1, s'étendant autour d'un axe de rotation et comprenant :
- un rotor interne configuré pour tourner autour de l'axe de rotation et comprenant un tambour interne sur lequel est fixé une pluralité de roues mobiles internes, comprenant chacune des aubes mobiles internes, et étant supportées en rotation par un premier arbre,
- un rotor externe configuré pour tourner autour de l'axe de rotation dans un sens opposé au sens de rotation du rotor interne, et comprenant un tambour externe sur lequel est fixé une pluralité de roues mobiles externes, comprenant chacune des aubes mobiles internes, et étant supportées en rotation par un deuxième arbre coaxial au premier arbre, le rotor externe comprenant une roue mobile aval ayant une pluralité d'aubes mobiles aval s'étendant entre une virole externe et une virole interne, une extrémité amont de la virole externe étant fixée au tambour externe en aval dudit tambour externe, la virole interne étant fixée au deuxième arbre,
au moins l'une de la virole interne et de la virole externe comprenant au moins une pièce de transition souple, configurée pour permettre une déformation élastique de ladite virole selon la direction radiale.

Dans le présent exposé, les termes « interne » et « externe », et les termes « intérieur » et « extérieur » et leurs dérivés sont considérés selon la direction radiale de la turbine. De même, les termes « amont » et « aval » sont considérés selon le sens d'écoulement des gaz dans la turbomachine, le long de l'axe de rotation.

Le premier et le deuxième arbre peuvent être tubulaires, et sont coaxiaux, en s'entendant le long de l'axe de rotation. Les roues mobiles internes du rotor interne sont intercalées, selon la direction axiale, avec les roues mobiles externes du rotor externe. La roue mobile aval est fixée au tambour externe en aval de ce dernier, et tourne en même temps que ce dernier. La roue mobile aval permet de faire la liaison entre le tambour externe et le deuxième arbre et ainsi de transmettre le couple des roues mobiles externes au deuxième arbre.

Les températures élevées auxquelles les aubes mobiles aval sont soumises dans la veine d'écoulement d'air chaud entrainent une dilatation de ces aubes, et donc un allongement de celles-ci dans la direction radiale. Or, la présence de la pièce de transition souple permet d'absorber cette déformation des aubes. Plus précisément, la déformation des aubes, notamment leur allongement, entraîne une déformation élastique de la virole par l'intermédiaire de la pièce de transition souple. En cas de refroidissement de la veine d'écoulement entrainant une rétractation des aubes mobiles aval, la virole retrouve alors élastiquement sa forme initiale. Ainsi, la pièce de transition souple permet d'absorber les contraintes engendrées par la dilatation des aubes mobiles aval, et d'éviter le phénomène de poinçonnement des viroles internes et/ou externes, tout en permettant la transmission du couple engendré par les aubes du rotor externe. Cela permet de limiter, voire supprimer la détérioration des viroles interne et/ou externe provoquée par la dilatation des aubes mobiles aval, et ainsi d'améliorer la fiabilité et la durée de vie de la turbine.

La virole externe est fixée à une plateforme d'une extrémité radialement externe d'une aube mobile aval, la pièce de transition souple étant fixée entre l'extrémité aval du tambour externe et la plateforme de manière à ce qu'un déplacement de la plateforme dans la direction radiale entraîne une déformation élastique de la pièce de transition souple.

De préférence, chaque aube s'étend entre deux plateformes individuelles. De manière alternative, une même plateforme peut être fixée à l'extrémité de plusieurs aubes simultanément, formant ainsi un secteur d'aubes. La plateforme est fixée à l'extrémité radialement externe d'une aube mobile aval de manière à ne former qu'une seule et même pièce avec celle-ci. La plateforme et l'aube peuvent notamment être fabriquées de manière monobloc. Les plateformes permettent de délimiter la veine d'écoulement d'air chaud.

Le couple engendré par la rotation du tambour externe est transmis aux aubes mobiles aval par l'intermédiaire de la pièce de transition souple et de la plateforme. Ainsi, la pièce de transition souple est configurée pour pouvoir se déformer élastiquement selon la direction radiale, tout en possédant une rigidité suffisante selon la direction circonférentielle de manière à pouvoir transmettre le couple du tambour externe aux aubes mobiles aval. Cette configuration peut s'appliquer de manière analogue à la virole interne.

Dans certains modes de réalisation, la pièce de transition souple présente la forme d'une plaque fixée à son extrémité amont au tambour externe, et à son extrémité aval à la plateforme, la pièce de transition souple étant espacée radialement de la plateforme entre ladite extrémité amont et ladite extrémité aval.

La pièce de transition souple et la plateforme forment deux plaques fixées l'une à l'autre à leur extrémité aval. Ainsi, hormis au niveau de la fixation entre la pièce de transition souple et la plateforme, ces dernière sont espacées radialement l'une de l'autre. Ainsi, dans le cas d'une dilatation radiale d'une aube, entrainant un déplacement de la plateforme vers l'extérieur dans la direction radiale, ladite plateforme se rapproche de la pièce de transition souple en réduisant l'espace entre ladite plateforme et la pièce de transition souple, cette dernière étant par ailleurs fixée au tambour externe à son extrémité amont. En d'autres termes, la pièce de transition souple agit comme un ressort à lame fixé entre le tambour externe et la plateforme, et dont la déformation élastique permet d'absorber les contraintes de dilatation radiales des aubes mobiles aval.

Dans certains modes de réalisation, une première fixation entre l'extrémité aval de la pièce de transition souple et l'extrémité aval de la plateforme est décalée radialement vers l'intérieur de la turbine par rapport à une deuxième fixation entre l'extrémité amont de la pièce de transition souple et le tambour externe.

Une telle configuration permet d'accentuer l'espace entre la plateforme et la pièce de transition souple, permettant ainsi d'augmenter la capacité de la pièce de transition souple à absorber les dilatations des aubes mobiles aval.

Dans certains modes de réalisation, la pièce de transition souple et la plateforme sont deux pièces distinctes, l'extrémité aval de la plateforme étant fixée à l'extrémité aval de la pièce de transition souple par l'intermédiaire d'un moyen de liaison.

La pièce de transition souple peut notamment comporter une bride radiale à chacune de ses extrémités axiales, une bride radiale amont étant fixée au tambour externe, et une bride radiale aval étant fixée à l'extrémité aval de la plateforme par l'intermédiaire du moyen de liaison.

Dans certains modes de réalisation, le moyen de liaison comprend une liaison boulonnée.

Ce mode de fixation présente l'avantage d'être simple à mettre en œuvre, et permet une fixation efficace de ces deux pièces, permettant la déformation élastique de la pièce de transition souple en cas de déformation des aubes, les forces de déformation transitant par cette liaison boulonnée.

Dans certains modes de réalisation, la pièce de transition souple et la plateforme forment une seule et même pièce.

Cette configuration permet également une transmission efficace des forces de déformations provenant des aubes, provoquant la déformation élastique de la pièce de transition souple. Cette configuration permet en outre de limiter le nombre de pièces du dispositif, simplifiant ainsi la structure et la fabrication de la turbine.

Dans certains modes de réalisation, la pièce de transition souple comprend, depuis son extrémité amont jusqu'à son extrémité aval, au moins une portion inclinée vers le centre de la turbine, et au moins une portion droite sensiblement parallèle à l'axe de rotation.

La présence de la portion inclinée facilite la déformation radiale de la pièce de transition souple. Ainsi, le coude formé entre la portion inclinée et la portion droite sensiblement parallèle à l'axe de rotation permet d'améliorer l'élasticité de la pièce de transition souple dans la direction radiale.

Dans certains modes de réalisation, la pièce de transition souple comprend au moins un pli radial, un pli radial étant une portion de la pièce de transition souple comprenant, de l'amont vers l'aval, une première paroi s'étendant radialement vers l'extérieur de la turbine, une deuxième paroi recourbée vers l'intérieur de la turbine et s'étendant depuis une extrémité de la première paroi, et une troisième paroi s'étendant radialement vers l'intérieur de la turbine depuis une extrémité de la deuxième paroi.

La présence d'un pli radial permet d'améliorer la souplesse de la pièce de transition souple dans la direction axiale. Cette souplesse permet d'absorber des chargements dynamiques, notamment des vibrations, des charges extrêmes, etc.

Dans certains modes de réalisation, la virole externe comprend une pluralité de secteurs de virole agencés circonférentiellement bout-à-bout, chaque secteur de virole étant fixé à au moins une aube mobile aval et comprenant une plateforme et une pièce de transition souple.

Le présent exposé concerne également une turbomachine comprenant la turbine contrarotative selon l'un quelconque des modes de réalisation précédents.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente une vue générale illustrant le principe de fonctionnement d'une turbomachine à soufflantes contrarotatives,
[Fig. 2] La figure 2 représente une vue en perspective d'un secteur de virole externe selon un premier mode de réalisation du présent exposé,
[Fig. 3] La figure 3 représente une vue latérale du secteur de virole externe de la figure 2,
[Fig. 4] La figure 4 représente une vue en perspective d'un secteur de virole externe selon un deuxième mode de réalisation du présent exposé,
[Fig. 5] La figure 5 représente une vue latérale d'un secteur de virole externe selon un troisième mode de réalisation du présent exposé,

### Description des modes de réalisation

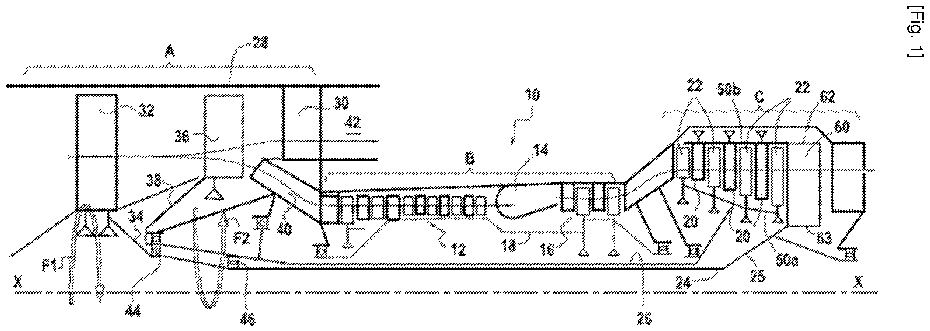

En référence à la figure 1, une turbomachine 10 à soufflantes contrarotatives comporte un axe longitudinal X-X. D'amont en aval selon le sens d'écoulement des gaz dans la turbomachine (représenté par la flèche noire), la turbomachine 10 comprend essentiellement trois parties: un module amont A (ou section de soufflante), un module intermédiaire B (ou corps haute-pression) et un module aval C (ou section de turbine basse pression). Par ailleurs, les termes « interne » ou « externe » et leurs dérivés font référence à la direction radiale de la turbomachine, la direction radiale étant perpendiculaire à l'axe X-X.

Les trois parties A, B et C de la turbomachine sont modulaires, c'est-à-dire qu'elles forment chacune un seul ensemble et peuvent être remplacées chacune en étant séparées des autres parties de la turbomachine.

De façon bien connue en soi, le corps haute-pression B comprend un générateur de gaz pour produire des gaz de combustion. Ce générateur de gaz comprend un compresseur 12, une chambre de combustion 14 et une turbine haute-pression 16.

L'air comprimé par le compresseur 12 est mélangé au carburant dans la chambre de combustion 14 avant d'y être brûlé. Les gaz de combustion ainsi produits entraînent les aubes mobiles de la turbine haute-pression 16 qui elle-même entraîne le compresseur 12 par l'intermédiaire d'un arbre haute-pression 18. La circulation des gaz de combustion dans la turbomachine 10 se fait axialement d'amont en aval.

La section de soufflante A est située à l'amont de la turbomachine 10. Un capot 28 entoure de façon annulaire cette section de soufflante A. Le capot 28 est supporté par des bras 30 qui s'étendent radialement vers l'intérieur de la turbomachine.

La section de soufflante A comporte une première rangée d'aubes de soufflante 32 montées sur un arbre de soufflante amont 34 qui est relié à une extrémité amont du premier arbre basse-pression 24.

La section de soufflante A comporte également une seconde rangée d'aubes de soufflante 36 qui sont espacées axialement vers l'aval de la première rangée d'aubes de soufflante 32 et montées sur un arbre de soufflante aval 38 relié à une extrémité amont du second arbre basse-pression 26. Néanmoins, le présent exposé n'est pas limité à une architecture à deux étages de soufflantes, et peut s'appliquer à d'autres types d'architecture.

Les première et seconde rangées d'aubes de soufflante 32, 36 tournent ainsi dans des directions opposées qui sont représentées, à titre d'exemple, par les flèches respectives F1 et F2. Cette configuration à soufflantes contrarotatives confère ainsi à la turbomachine un rendement élevé pour une consommation spécifique relativement faible.

Les aubes de soufflante 32, 36 s'étendent radialement depuis les arbres de soufflante amont 34 et aval 38 pratiquement jusqu'au capot 28. Elles sont disposées dans le passage de circulation de l'air alimentant à la fois la veine primaire 40 conduisant au compresseur 12 du corps haute pression B et la veine secondaire 42 de contournement.

Au niveau de son extrémité amont, le premier arbre basse-pression 24 supporte en rotation le second arbre basse-pression 26 par l'intermédiaire d'un premier palier à roulement 44 et d'un second palier à roulement 46 disposé en aval du premier.

Le premier palier à roulement 44 est du type à billes pour tenir aux charges axiales, tandis que le second palier à roulement 46 est du type à rouleaux pour tenir aux charges radiales de la turbomachine.

La section de turbine basse-pression C comprend un premier rotor annulaire, ou rotor externe. Ce premier rotor comprend une rangée de roues mobiles internes comprenant des aubes mobiles externes de turbine 20 qui s'étendent radialement vers l'intérieur et qui sont espacées axialement les unes des autres.

La section de turbine basse-pression C comprend également un second rotor annulaire, ou rotor interne. Ce second rotor comprend une rangée de roues mobiles internes comprenant des aubes mobiles internes de turbine 22 qui s'étendent radialement vers l'extérieur et qui sont espacées axialement les unes des autres. Les aubes de turbine 20, 22 des premier et second rotors sont disposées en alternance les unes par rapport aux autres de sorte que le premier et le second rotors sont imbriqués l'un dans l'autre.

Les roues mobiles externes du premier rotor sont supportées en rotation par le premier arbre basse-pression 24. De même, les roues mobiles externes du second rotor sont supportées en rotation par le second arbre basse-pression 26 disposé de façon coaxiale autour du premier arbre 24. Les arbres basse-pression 24, 26 s'étendent axialement de l'amont vers l'aval de la turbomachine.

La section de turbine basse-pression C est traversée par les gaz de combustion provenant du corps haute-pression B. Ces gaz de combustion entraînent donc en rotation les aubes de turbine 20, 22 des premier et second rotors dans des sens opposés. Ainsi, les premier et second arbres basse-pression 24, 26 tournent également de façon contrarotative.

Par ailleurs, les aubes mobiles internes 22 comprennent un pied fixé à un tambour interne 50a, et s'étendent radialement vers l'extérieur depuis ce pied jusqu'à une extrémité radialement externe. Les aubes mobiles externes 20 comprennent une portion externe fixée à un tambour externe 50b, et s'étendent radialement vers l'intérieur depuis cette base jusqu'à une extrémité radialement interne.

La suite de la description décrit un mode de fixation d'aubes mobiles aval, en référence à la turbine basse pression C de la turbomachine 10. Néanmoins, ce mode de fixation ne se limite pas à cette turbine basse pression, et peut s'adapter à d'autres éléments de la turbomachine, par exemple la turbine haute pression.

La liaison entre le tambour externe 50b du rotor externe, et le deuxième arbre de turbine 24, est réalisée par l'intermédiaire d'une roue mobile aval 60 fixée au tambour externe 50b en aval de celui-ci. Plus précisément, cette roue mobile aval 60 est la roue mobile disposée la plus en aval dans le rotor externe. Il peut s'agir notamment, de manière connue, de l'étage numéro 6 de la turbine contrarotative. Cette roue mobile aval 60 comprend une virole radialement externe 62 fixée au tambour externe 50b axialement en aval de celui-ci, et une virole radialement interne 63 solidaire du deuxième arbre de turbine 24, notamment par l'intermédiaire d'un arbre de support arrière 25 s'étendant entre la virole interne 63 et le deuxième arbre de turbine 24. La virole radialement externe 62 peut être fixée au tambour externe 50b par l'intermédiaire d'une liaison boulonnée par exemple (non représentée). De manière alternative, la virole externe 62 peut être disposée dans le prolongement axial du tambour externe 50b, en formant une seule et même pièce avec ce dernier.

Les viroles interne 63 et externe 62 sont concentriques et axisymétriques autour de l'axe X. Des bras radiaux, dits aubes mobiles aval 61, s'étendent radialement entre la virole interne 63 et la virole externe 62, et permettent de maintenir ces dernières solidaires l'une de l'autre, la rotation de l'une entrainant la rotation de l'autre. Ainsi, lorsque les aubes 20 du rotor externe sont entrainées en rotation dans le deuxième sens de rotation, la rotation du tambour externe 50b entraine la rotation de la virole externe 62. Ce mouvement de rotation est transmis à la virole interne 63 par l'intermédiaire des aubes 61de la roue mobile aval 60, permettant la rotation du deuxième arbre de turbine 24.

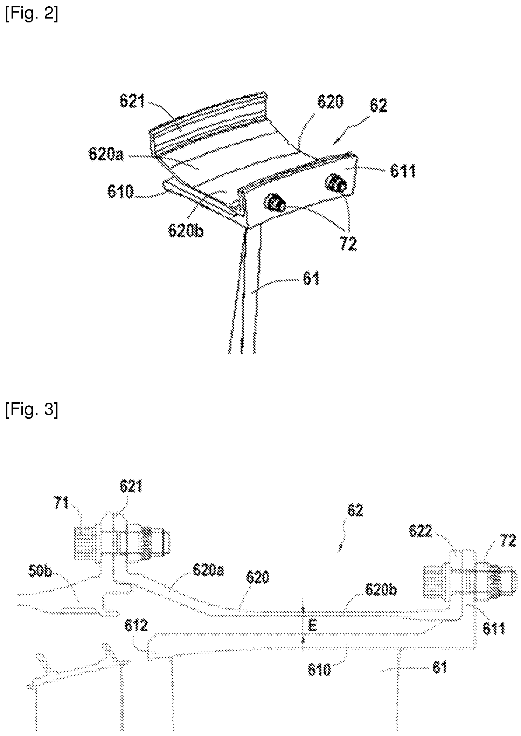

Un mode de fixation entre les aubes mobiles aval 61, la virole externe 62 et le tambour externe 50b va être décrit en référence aux figures 2 à 5. Bien que la suite de la description fasse référence à la virole externe 62, l'invention n'est pas limitée à cette dernière, et est également applicable à la virole interne 63.

De préférence, la virole externe 62 comprend une pluralité de secteurs fixés circonférentiellement les uns aux autres bout-à-bout de manière à former une virole annulaire. Par soucis de simplification, les figures 2 à 5 illustrent chacune un seul secteur de virole 62, associé à une aube mobile aval 61. Chaque secteur de virole externe 62 comprend une pièce de transition souple 620 fixée à une plateforme 610 d'une extrémité de l'aube mobile aval 61.

La plateforme 610 est fixée à une extrémité radialement externe de l'aube mobile aval 61, et forme une seule et même pièce avec celle-ci. L'ensemble des plateformes 610, lorsqu'elles sont assemblées circonférentiellement, délimite la veine d'écoulement d'air chaud.

Un premier mode de réalisation du présent exposé va être décrit en référence aux figures 2 et 3.

La plateforme 610 comprend une extrémité amont 612 et une extrémité aval 611. L'extrémité amont 612 est une extrémité libre, et l'extrémité aval 611 présente la forme d'une bride radiale s'étendant radialement et étant fixée à la pièce de transition souple 620.

La pièce de transition souple 620 comprend une première bride 621 s'étendant radialement à son extrémité amont. La première bride 621 est fixée à l'extrémité aval du tambour externe 50b, notamment sur une bride radiale de ce dernier, par l'intermédiaire d'une première liaison boulonnée 71.

La pièce de transition souple 620 comprend une deuxième bride 622 s'étendant radialement à son extrémité aval. La deuxième bride 622 est fixée à l'extrémité aval de la plateforme 610, notamment sur la bride aval 611, par l'intermédiaire d'une deuxième liaison boulonnée 72. De préférence, l'axe des première et deuxième liaisons boulonnées 71, 72 est sensiblement parallèle à l'axe de rotation X. La fixation entre la bride aval 611 de la plateforme 610 et la deuxième bride 622 de la pièce de transition souple 620 peut comprendre deux deuxièmes liaisons boulonnées 72, ou davantage. La figure 2 illustre un exemple dans lequel cette fixation comprend deux deuxièmes liaisons boulonnées 72 (la première liaison boulonnée 71 n'est pas représentée).

La pièce de transition souple 620 présente la forme d'une plaque métallique comprenant par exemple un alliage à base de nickel. Ce matériau pouvant être utilisé sur d'autres pièces de la turbine, l'invention ne nécessite donc pas l'utilisation d'un nouveau matériau. La pièce de transition souple 620 est de largeur de préférence égale à la largeur de la plateforme 610 sur laquelle elle est fixée. Le plan principal selon lequel s'étend la pièce de transition souple 620 est sensiblement parallèle à l'axe de rotation X. Ainsi, la pièce de transition souple 620 présente une rigidité suffisante dans la direction circonférentielle, permettant de transmettre le couple, provenant du tambour externe 50b, aux aubes mobiles aval 61. A l'inverse, la pièce de transition souple 620 est plus souple dans la direction radiale, de telle sorte qu'une force exercée par une aube mobile aval 61 entraîne une déformation de la pièce de transition souple 620.

La fixation entre la pièce de transition souple 620 et la plateforme 610 est telle qu'au repos, un espace E, pas nécessairement constant, existe ces deux pièces, en amont de la fixation entre celles-ci. On entend par « au repos », un état dans lequel la pièce de transition souple 620 n'est soumise à aucune déformation. Cette configuration est illustrée sur les figures 2 et 3. Par ailleurs, dans cet exemple, la pièce de transition souple 620 comprend une première portion 620a et une deuxième portion 620b. La première portion 620a s'étend axialement, de l'amont vers l'aval, entre la première bride 621 et la deuxième portion 620b, et est inclinée vers le centre de la turbine, c'est-à-dire vers l'axe de rotation X. La deuxième portion 620b s'étend axialement, de l'amont vers l'aval, entre la première portion 620a et la deuxième bride 622, et est sensiblement parallèle à l'axe de rotation X. De plus, l'axe de la deuxième liaison boulonnée 72 est décalé radialement vers le centre de la turbine, c'est-à-dire vers l'axe de rotation X, par rapport à l'axe de la première liaison boulonnée 71. L'espace E est ainsi plus important au niveau de l'extrémité amont 612 de la plateforme 610.

En cas de dilation radiale de l'aube mobile aval 61, la plateforme 610 se déplace radialement (vers le haut sur la figure 3), son extrémité amont 612 étant libre. A l'inverse, l'extrémité amont de la pièce de transition souple 620 n'est pas libre, mais fixée rigidement au tambour externe 50b. Ainsi, compte tenu de la fixation entre la plateforme 610 et la pièce de transition souple 620, le déplacement de la plateforme 610 provoque une déformation élastique de la pièce de transition souple 620, facilitée par la structure et la configuration de celle-ci. Le déplacement de la plateforme 610 entraîne en outre une réduction de l'espace E. En cas de baisse de température dans la veine d'écoulement d'air chaud, entrainant une rétractation de l'aube 61, la pièce de transition souple peut alors retrouver sa forme initiale. En d'autres termes, la pièce de transition souple 620 agit comme un ressort à lame permettant de compenser, et d'absorber les déformations de l'aube 61, sans engendrer de contraintes excessives, dues au phénomène de poinçonnement, dans la virole 62, et notamment dans la plateforme 610.

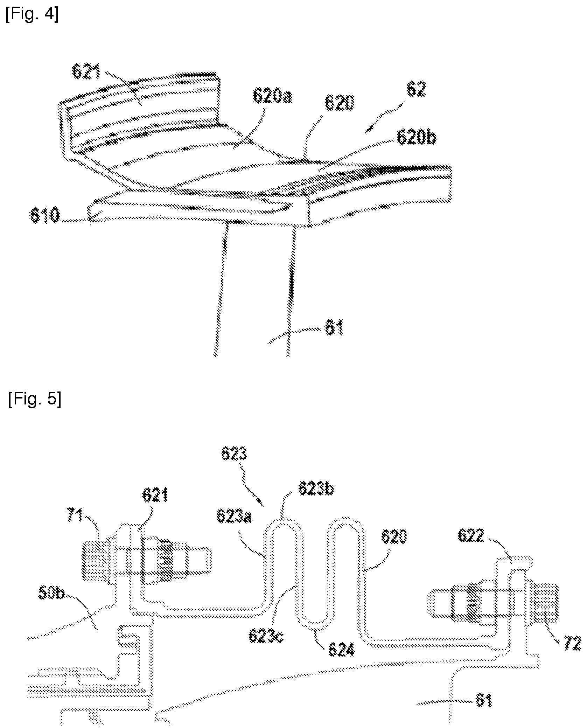

Un deuxième mode de réalisation du présent exposé va être décrit en référence à la figure 4.

Selon ce mode de réalisation, la pièce de transition souple 620 présente une forme identique à celle du premier mode de réalisation, et comprend notamment une première portion 620a inclinée et une deuxième portion 620b droite. Contrairement au première mode de réalisation, la plateforme 610 et la pièce de transition souple 620 ne sont pas deux pièces distinctes, mais forment ensemble une seule est même pièce. Ainsi, la fixation entre ces deux pièces à l'extrémité aval de celles-ci ne comporte pas la deuxième liaison boulonnée 72 du premier mode de réalisation. La première liaison boulonnée 71 est en revanche conservée (non représentée sur la figure 4). Le secteur de virole 62 est ainsi formé en étant fabriqué d'un seul bloc, avec l'aube 61, par fonderie ou par fabrication additive par exemple.

Un troisième mode de réalisation du présent exposé va être décrit en référence à la figure 5.

Selon ce mode de réalisation, le mode de fixation de la pièce de transition souple 620 au tambour externe 50b et à la plateforme 610 est identique à celui du premier mode de réalisation, par l'intermédiaire notamment de la première et de la deuxième liaison boulonnée 71, 72. En revanche, la forme de la pièce de transition souple 620 diffère de celle du premier et du deuxième mode de réalisation.

Selon ce troisième mode de réalisation, la pièce de transition souple 620 comprend deux plis radiaux 623. Un pli radial 623 comprend une première paroi 623a s'étendant radialement vers l'extérieur depuis une portion amont de la pièce de transition souple 620, une deuxième paroi 623b recourbée vers l'intérieur de la turbine et s'étendant depuis une extrémité de la première paroi 623a, et une troisième paroi 623c s'étendant radialement vers l'intérieur de la turbine depuis une extrémité de la deuxième paroi 623b. Les deux plis 623 sont reliés entre eux par une paroi intermédiaire 624 recourbée vers l'extérieur de la turbine. Dans cet exemple, la pièce de transition souple 620 comprend deux plis 623. Cependant, ce nombre n'est pas limitatif, la pièce de transition souple 620 pouvant comprendre un seul pli radial 623, ou un nombre supérieur à deux plis radiaux 623. Cette structure en accordéon permet d'accroître la souplesse axiale de la pièce de transition souple 620, en comparaison à la structure des premier et deuxième modes de réalisation, tout en conservant la souplesse radiale de celle-ci.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par exemple, les deuxième et troisième modes de réalisation peuvent être combinés, la pièce de transition souple 620 comprenant ainsi au moins un pli radial 623, et forme une seule et même pièce avec la plateforme 610. Par conséquent, la description et les dessins doivent être considérés dans un sens illustratif plutôt que restrictif.

## Revendications

1. Turbine contrarotative (C) de turbomachine (10) s'étendant autour d'un axe de rotation (X) et comprenant :
- un rotor interne configuré pour tourner autour de l'axe de rotation (X), et comprenant un tambour interne (50a) sur lequel est fixé une pluralité de roues mobiles internes (22), comprenant chacune des aubes mobiles internes, et étant supportées en rotation par un premier arbre (26),
- un rotor externe configuré pour tourner autour de l'axe de rotation (X) dans un sens opposé au sens de rotation du rotor interne, et comprenant un tambour externe (50b) sur lequel est fixé une pluralité de roues mobiles externes (20), comprenant chacune des aubes mobiles externes, et étant supportées en rotation par un deuxième arbre (24) coaxial au premier arbre (26), le rotor externe comprenant une roue mobile aval (60) ayant une pluralité d'aubes mobiles aval (61) s'étendant entre une virole externe (62) et une virole interne (63), une extrémité amont de la virole externe (62) étant fixée au tambour externe (50b) en aval dudit tambour externe, la virole interne (63) étant fixée au deuxième arbre (24),
au moins l'une de la virole interne (63) et de la virole externe (62) comprenant au moins une pièce de transition souple (620), configurée pour permettre une déformation élastique de ladite virole selon la direction radiale, dans laquelle la virole externe (62) est fixée à une plateforme (610) d'une extrémité radialement externe d'une aube mobile aval (61), **caractérisée en ce que** la pièce de transition souple (620) est fixée entre l'extrémité aval du tambour externe (50b) et la plateforme (610) de manière à ce qu'un déplacement de la plateforme (610) dans la direction radiale entraîne une déformation élastique de la pièce de transition souple (620).

2. Turbine (C) selon la revendication 1, dans laquelle la pièce de transition souple (620) présente la forme d'une plaque fixée à son extrémité amont (621) au tambour externe (50b), et à son extrémité aval (622) à la plateforme (610), la pièce de transition souple (620) étant espacée radialement de la plateforme (610) entre ladite extrémité amont (621) et ladite extrémité aval (622).

3. Turbine (C) selon la revendication 1 ou 2, dans laquelle une première fixation entre l'extrémité aval (622) de la pièce de transition souple (620) et l'extrémité aval (611) de la plateforme (610) est décalée radialement vers l'intérieur de la turbine par rapport à une deuxième fixation entre l'extrémité amont (621) de la pièce de transition souple (620) et le tambour externe (50b).

4. Turbine (C) selon l'une quelconque des revendications 1 à 3, dans laquelle la pièce de transition souple (620) et la plateforme (610) sont deux pièces distinctes, l'extrémité aval (611) de la plateforme (610) étant fixée à l'extrémité aval (622) de la pièce de transition souple (620) par l'intermédiaire d'un moyen de liaison (72).

5. Turbine (C) selon la revendication 4, dans laquelle le moyen de liaison (72) comprend une liaison boulonnée.

6. Turbine (C) selon l'une quelconque des revendications 1 à 3, dans laquelle la pièce de transition souple (620) et la plateforme (610) forment une seule et même pièce.

7. Turbine (C) selon l'une quelconque des revendications 1 à 6,
dans laquelle la pièce de transition souple (620) comprend, depuis son extrémité amont (621) jusqu'à son extrémité aval (622), au moins une portion inclinée (620a) vers le centre de la turbine, et au moins une portion droite (620b) sensiblement parallèle à l'axe de rotation (X).

8. Turbine (C) selon l'une quelconque des revendications 1 à 6, dans laquelle la pièce de transition souple (620) comprend au moins un pli radial (623), un pli radial (623) étant une portion de la pièce de transition souple (620) comprenant, de l'amont vers l'aval, une première paroi (623a) s'étendant radialement vers l'extérieur de la turbine, une deuxième paroi (623b) recourbée vers l'intérieur de la turbine et s'étendant depuis une extrémité de la première paroi (623a), et une troisième paroi (623c) s'étendant radialement vers l'intérieur de la turbine depuis une extrémité de la deuxième paroi (623b).

9. Turbine (C) selon l'une quelconque des revendications 1 à 8, dans laquelle la virole externe (62) comprend une pluralité de secteurs de virole agencés circonférentiellement bout-à-bout, chaque secteur de virole étant fixé à au moins une aube mobile aval (61) et comprenant une plateforme (610) et une pièce de transition souple (620).

10. Turbomachine (10) comprenant la turbine contrarotative (C) selon l'une quelconque des revendications précédentes.

## Patentansprüche

1. Gegenläufige Turbine (C) einer Strömungsmaschine (10), die sich um eine Drehachse (X) erstreckt und Folgendes umfasst:
- einen inneren Rotor, der konfiguriert ist, um um die Drehachse (X) zu drehen, und umfassend eine innere Trommel (50a), an der eine Vielzahl von inneren bewegbaren Rädern (22) befestigt ist, jeweils umfassend innere bewegbare Schaufeln und die von einer ersten Welle (26) drehbar gelagert sind,
- einen äußeren Rotor, der konfiguriert ist, um in einer Richtung entgegengesetzt zu der Drehrichtung des inneren Rotors um die Drehachse (X) zu drehen, und umfassend eine äußere Trommel (50b), an der eine Vielzahl von äußeren Laufrädern (20) befestigt ist, jeweils umfassend äußere bewegbare Schaufeln und die von einer zweiten Welle (24), die koaxial zu der ersten Welle (26) ist, drehbar gelagert sind, der äußere Rotor umfassend ein stromabwärtiges Laufrad (60), das eine Vielzahl von stromabwärtigen bewegbaren Schaufeln (61) aufweist, die sich zwischen einem Außenring (62) und einem Innenring (63) erstrecken, wobei ein stromaufwärtiges Ende des Außenrings (62) an der äußeren Trommel (50b) stromabwärts von der äußeren Trommel befestigt ist, der Innenring (63) an der zweiten Welle (24) befestigt ist,
mindestens einer von dem Innenring (63) und dem Außenring (62) umfassend mindestens ein flexibles Übergangsstück (620), das konfiguriert ist, um eine elastische Verformung des Rings in der radialen Richtung zu ermöglichen, wobei der Außenring (62) an einer Plattform (610) eines radial äußeren Endes einer stromabwärtigen bewegbaren Schaufel (61) befestigt ist, **dadurch gekennzeichnet, dass** das flexible Übergangsstück (620) zwischen dem stromabwärtigen Ende der äußeren Trommel (50b) und der Plattform (610) befestigt ist, sodass eine Bewegung der Plattform (610) in der radialen Richtung eine elastische Verformung des flexiblen Übergangsstücks (620) bewirkt.

2. Turbine (C) nach Anspruch 1, wobei das flexible Übergangsstück (620) die Form einer Platte aufweist, die an ihrem stromaufwärtigen Ende (621) an der äußeren Trommel (50b) und an ihrem stromabwärtigen Ende (622) an der Plattform (610) befestigt ist, das flexible Übergangsstück (620) zwischen dem stromaufwärtigen Ende (621) und dem stromabwärtigen Ende (622) radial von der Plattform (610) beabstandet ist.

3. Turbine (C) nach Anspruch 1 oder 2, wobei eine erste Befestigung zwischen dem stromabwärtigen Ende (622) des flexiblen Übergangsstücks (620) und dem stromabwärtigen Ende (611) der Plattform (610) in Bezug auf eine zweite Befestigung zwischen dem stromaufwärtigen Ende (621) des flexiblen Übergangsstücks (620) und der äußeren Trommel (50b) radial nach innen in die Turbine versetzt ist.

4. Turbine (C) nach einem der Ansprüche 1 bis 3, wobei das flexible Übergangsstück (620) und die Plattform (610) zwei verschiedene Teile sind, wobei das stromabwärtige Ende (611) der Plattform (610) über eine Verbindungseinrichtung (72) an dem stromabwärtigen Ende (622) des flexiblen Übergangsstücks (620) befestigt ist.

5. Turbine (C) nach Anspruch 4, wobei die Verbindungseinrichtung (72) eine Schraubverbindung umfasst.

6. Turbine (C) nach einem der Ansprüche 1 bis 3, wobei das flexible Übergangsstück (620) und die Plattform (610) ein einziges Teil bilden.

7. Turbine (C) nach einem der Ansprüche 1 bis 6, wobei das flexible Übergangsstück (620) von seinem stromaufwärtigen Ende (621) zu seinem stromabwärtigen Ende (622) mindestens einen zu der Turbinenmitte hin geneigten Abschnitt (620a) und mindestens einen geraden Abschnitt (620b), der im Wesentlichen parallel zu der Drehachse (X) ist, umfasst.

8. Turbine (C) nach einem der Ansprüche 1 bis 6, wobei das flexible Übergangsstück (620) mindestens eine radiale Falte (623) umfasst, eine radiale Falte (623) ein Abschnitt des flexiblen Übergangsstücks (620) ist, umfassend von stromaufwärts nach stromabwärts, eine erste Wand (623a), die sich radial zur Außenseite der Turbine erstreckt, eine zweite Wand (623b), die in das Innere der Turbine gebogen ist und sich von einem Ende der ersten Wand (623a) erstreckt, und eine dritte Wand (623c), die sich von einem Ende der zweiten Wand (623b) radial in das Innere der Turbine erstreckt.

9. Turbine (C) nach einem der Ansprüche 1 bis 8, wobei der Außenring (62) eine Vielzahl von Ringsektoren umfasst, die in Umfangsrichtung Ende an Ende angeordnet sind, jeder Ringsektor an mindestens einer stromabwärtigen bewegbaren Schaufel (61) befestigt ist und eine Plattform (610) und ein flexibles Übergangsstück (620) umfasst.

10. Strömungsmaschine (10), umfassend die gegenläufige Turbine (C) nach einem der vorherigen Ansprüche.

## Claims

1. A counter-rotating turbine (C) for a turbine engine (10) extending around an axis of rotation (X) and comprising:
- an inner rotor configured to rotate around the axis of rotation (X), and comprising an inner drum (50a) to which a plurality of inner impellers (22) is attached, each comprising inner moving blades and being rotatably supported by a first shaft (26),
- an outer rotor configured to rotate around the axis of rotation (X) in a direction opposite to the direction of rotation of the inner rotor, and comprising an outer drum (50b) to which is attached a plurality of outer impellers (20), each comprising outer moving blades and being rotatably supported by a second shaft (24) coaxial with the first shaft (26), the outer rotor comprising a downstream impeller (60) having a plurality of downstream moving blades (61) extending between an outer shroud (62) and an inner shroud (63), an upstream end of the outer shroud (62) being attached to the outer drum (50b) downstream of said outer drum, the inner shroud (63) being attached to the second shaft (24),
at least one of the inner shroud (63) and of the outer shroud (62) comprising at least one flexible transition part (620) configured to allow elastic deformation of said shroud in the radial direction, wherein the outer shroud (62) is attached to a platform (610) of a radially outer end of a downstream moving blade (61), **characterized in that** the flexible transition part (620) is attached between the downstream end of the outer drum (50b) and the platform (610) so that a displacement of the platform (610) in the radial direction causes an elastic deformation of the flexible transition part (620).

2. The turbine (C) according to claim 1, wherein the flexible transition part (620) has the shape of a plate attached at its upstream end (621) to the outer drum (50b), and at its downstream end (622) to the platform (610), the flexible transition part (620) being spaced radially from the platform (610) between said upstream end (621) and said downstream end (622).

3. The turbine (C) according to claim 1 or 2, wherein a first attachment between the downstream end (622) of the flexible transition part (620) and the upstream end (611) of the platform (610) is radially offset toward the inside of the turbine relative to a second attachment between the upstream end (621) of the flexible transition part (620) and the outer drum (50b).

4. The turbine (C) according to any one of claims 1 to 3, wherein the flexible transition part (620) and the platform (610) are two distinct parts, the downstream end (611) of the platform (610) being attached to the downstream end (622) of the flexible transition part (620) by means of a link (72).

5. The turbine (C) according to claim 4, wherein the link (72) comprises a bolted connection.

6. The turbine (C) according to any one of claims 1 to 3, wherein the flexible transition part (620) and the platform (610) form a single and identical part.

7. The turbine (C) according to any one of claims 1 to 6, wherein the flexible transition part (620) comprises, from its upstream end (621) to its downstream end (622), at least one inclined portion (620a) inclined toward the center of the turbine, and at least one straight portion (620b) substantially parallel to the axis of rotation (X).

8. The turbine (C) according to any one of claims 1 to 6, wherein the flexible transition part (620) comprises at least one radial fold (623), a radial fold (623) being a portion of the flexible transition part (620) comprising, from upstream to downstream, a first wall (623a) extending toward the outside of the turbine, a second wall (623b) curved toward the inside of the turbine and extending from one end of the first wall (623a), and a third wall (623c) extending radially toward the inside of the turbine from one end of the second wall (623b).

9. The turbine (C) according to any one of claims 1 to 8, wherein the outer shroud (62) comprises a plurality of shroud sectors arranged circumferentially end to end, each shroud sector being attached to at least one downstream moving blade (61) and comprising a platform (610) and a flexible transition part (620).

10. A turbine engine (10) comprising the counter-rotating turbine (C) according to any one of the preceding claims.
